**Europäisches Patentamt**

**European Patent Office**

**Office européen des brevets**

(19)

(11) Publication number : **0 621 556 A2**

(12) # EUROPEAN PATENT APPLICATION

(21) Application number : **94420123.5**

(22) Date of filing : **19.04.94**

(51) Int. Cl.⁵ : **G06K 9/68**

(30) Priority : **21.04.93 US 51122**

(43) Date of publication of application :
**26.10.94 Bulletin 94/43**

(84) Designated Contracting States :
**DE FR GB**

(71) Applicant : **EASTMAN KODAK COMPANY**
**343 State Street**
**Rochester New York 14650-2201 (US)**

(72) Inventor : **Rogova, Galina, c/o Eastman Kodak**
**Company**
**Patent Legal Staff,**
**343 State Street**
**Rochester, New York 14650-2201 (US)**

(74) Representative : **Buff, Michel et al**
**Kodak-Pathé**
**Département des Brevets et Licences CRT**
**Centre de Recherches et de Technologie**
**Zone Industrielle**
**F-71102 Chalon sur Saône Cédex (FR)**

(54) **A process for combining the results of several classifiers.**

(57) A process for successfully combining the results of several classifiers provides a method for calculating confidences of each classification decision for every classifier involved. Confidences are then combined according to the Dempster-Shafer Theory of Evidence. Initially, basic probability assignments for each of the classifiers are calculated and used to calculate confidences for each classifier. The confidences for all of the classifiers are then combined. The combined confidences are then used to determine a class for the data input to the classifiers.

FIG.1

## Technical Field

The present invention is directed to the field of pattern classification and recognition and, more particularly, to a mechanism for calculating a confidence of any classification decision.

## Background Art

Pattern recognition problems, such as classification of machine or hand-printed character, are currently solved with some accuracy by using traditional classifiers or neural networks of different types. It is easier in many cases to apply several classifiers to the same recognition task to improve recognition performance in a combined system, instead of inventing a new architecture or a feature extractor to achieve the same accuracy. However, it is necessary to assign a measure of evidence to a classification decision of each classifier in a system, to be able to combine them. Unfortunately, such assignments demand numerous approximations, especially when the number of classes is large. This creates computational difficulties, and can decrease the quality of the recognition performance.

It is known in the art to use the Dempster-Shafer Theory of Evidence as a tool for representing and combining measures of evidence. In the existing art, U.S. Patent No. 5,123,057 uses the Dempster-Shafer Theory of Evidence to calculate a degree of match between data events portions and model parts. Evidence is collected and processed after preliminary matching has been performed using the Dempster-Shafer Theory of Evidence.

Additionally, U.S. Patent No. 5,077,807 to Bokser describes a method for processing input feature vectors. Again, the '807 patent relates to a preprocessing means for pattern recognition. So although the prior art addresses the problem of pattern classification and recognition, the existing art does not address the use of the Dempster-Shafer Theory of Evidence as a postrecognition or postprocessing tool to combine results of several classifiers.

It is seen then that it would be desirable to have a means for improving the results of classification.

## Summary of the Invention

The present invention improves the results of classification by successfully combining the results of several classifiers. The invention also improves the results of classification by eliminating numerous approximations which result in a decreased accuracy and quality of the classification and recognition performance.

Specifically, the present invention uses a distance measure between a classifier output vector and a mean vector for a subset of training data corresponding to each class. Using these distances for basic probability assignments in the framework of the Dempster-Shafer Theory of Evidence, evidences for all classification decisions for each classifier can be calculated and combined.

In accordance with one aspect of the present invention, a method for combining the results of several classifiers comprises a series of steps. Basic probability assignments are calculated for each of the classifiers and used to calculate confidences for each classifier. The confidences for all of the classifiers are then combined. Finally, the combined confidences are used to determine a class for data input to the classifiers.

Accordingly, it is an object of the present invention to provide a mechanism for calculating a confidence of any classification decision, which can increase the quality of recognition performance. Other objects and advantages of the invention will be apparent from the following description, the accompanying drawings and the appended claims.

## Brief Description of the Drawings

Fig. 1 is block diagram illustrating the combination of several classifiers; and
Fig. 2 is a flowchart illustrating the steps employed to achieve the combination of the several classifiers, as depicted in Fig. 1.

## Detailed Description of the Preferred Embodiments

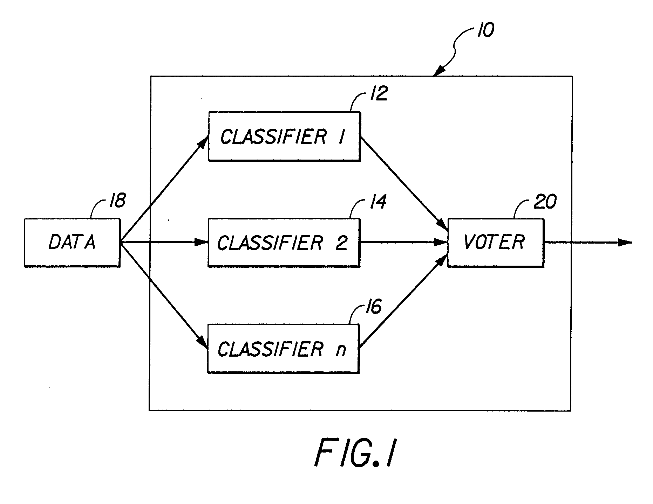

The present invention relates to a mechanism for combining the results of several classifiers. Referring to Fig. 1, a block diagram 10 illustrates the combination of several classifiers. In Fig. 1, three classifiers 12, 14, and 16 are shown for descriptive purposes. However, the concept of the present invention will be applicable to a system having any number of classifiers, from one to N.

As can be seen in Fig. 1, data from data block 18 is input to each classifier 12, 14, and 16. The present invention allows for the determination of the class of data from data block 18 being input to the classifiers 12, 14, and 16, based on the output of the classifiers to a voter block 20.

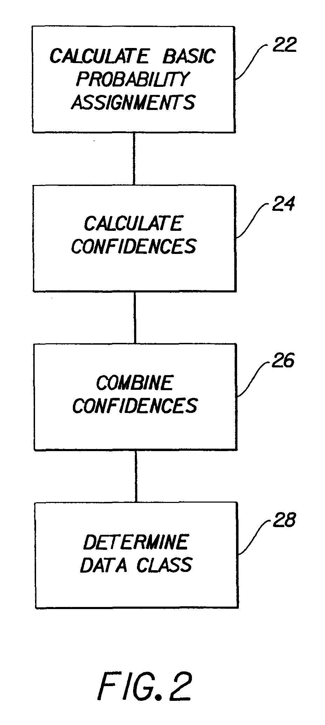

Referring now to Fig. 2 and continuing with Fig. 1, inside each classifier block 12, 14, and 16, a basic probability assignment is calculated, as indicated by block 22 of Fig. 2. The basic probability assignments are used to calculate confidences for each classifier, as indicated at block 24. The confidences output from each classifier block are combined at the voter block 20, as indicated at block 26. The voter block 20 uses the outputs of the classifiers as its input, can calculate confidence, i.e., evidence, for the output of each classifier, and combines these confidences. The confidence or evidence for each classifier is a measure of the correctness of the answer that the classifier produces. As indicated at step 28 of Fig. 2, a classification is then made, identifying the input from the data block 18 for the classifier which is to be recognized, based on the combined confidences from the voter block 20. The output of the voter block 20, then, is the result of the classification process of the present invention. The present invention provides improved results by taking into account the different decisions of different classifiers.

In a preferred embodiment, the basic probability assignments are calculated using a distance measure in accordance with the Dempster-Shafer Theory of Evidence. The confidences and the combinations are also calculated according to the Dempster-Shafer Theory of Evidence. Using the distance measures for basic probability assignments in the framework of the Dempster-Shafer Theory of Evidence, evidences for all classification decisions for each classifier can be calculated and combined.

In applying the teachings of the present invention, assume

$$\overline{x}_k$$

to be a subset of the training data corresponding to a class k. In addition, assume

$$\overline{E}_k^n$$

to be a mean vector for a set

$$f^n(\overline{x}_k)$$

for each classifier $f^n$ and each class k. Then

$$\overline{E}_k^n$$

is a reference vector for each class k, and

$$d_k^n = \phi(\overline{E}_k^n, \overline{y}^n)$$

is a distance measure between

$$\overline{E}_k^n$$

and

$$\overline{y}^n.$$

This distance measure can be used to calculate the basic probability assignments of block 22 in Fig. 2, in accordance with the Dempster-Shafer Theory of Evidence.

According to the Dempster-Shafer Theory of Evidence, consider a frame of discernment

$$\Theta = (\theta_1,...,\theta_2),$$

where

$$\theta_k$$

is the hypothesis that "a vector

$$\overline{y}^n$$

is of the class k". For any classifier $f^n$ and each class k, a distance measure $d_i^n$ can represent evidence in support of hypothesis

$$\theta_k$$

if i = k, and in support of

$$\theta_k$$

or against

$$\neg\theta_k$$

$$\theta_k,$$

if i is not equal to k.

With $\Theta$ as the frame of discernment, $2^\Theta$ denotes the set of all subsets of $\Theta$. A function m is called a basic probability assignment if $m:2^\Theta \rightarrow$

$$m(\emptyset) = 0$$

[0,1], and

$$\sum_{A \subseteq \Theta} m(A) = 1,$$

3

where m(A) represents the exact belief in the hypothesis A. Therefore, if m is a basic probability assignment, then a function Bel:$2^\Theta \to$[0,1] satisfying

$$Bel(B) = \sum_{A \subseteq B} m(A)$$

is called a belief function.

There is a one-to-one correspondence between the belief function and the basic probability assignment. If $m_1$ and $m_2$ are basic probability assignments on $\Theta$, their combination or orthogonal sum,

$$m = m_1 \oplus m_2,$$

is defined as

$$m(A) = C^{-1} \sum_{D \cap B = A} m_1(B) \cdot m_2(D),$$

where

$$C = \sum_{D \cap B \neq A} m_1(B) \cdot m_2(D),$$

where

$$m(\emptyset) = 0$$

and

$$A \neq \emptyset.$$

Since there is the one-to-one correspondence between Bel and m, the orthogonal sum of belief functions

$$Bel = Bel_1 \oplus Bel_2$$

is defined in the obvious way.

Special kinds of belief functions are very good at representing evidence. These functions are called simple and separable support functions. Bel is a simple support function if there exists an

$$F \subseteq \Theta,$$

called the focus of Bel, such that Bel($\Theta$) = 1 and Bel(A) = s, if both conditions,

$$F \subseteq A$$

and

$$A \neq \Theta,$$

where s is called Bel's degree of support.

Otherwise, Bel(A) = 0. A separable support function is either a simple support function or an orthogonal sum of simple support functions. Separable support functions are very useful when it is desired to combine evidences from several sources. If Bel is a simple support function with focus

$$F \neq \Theta,$$

then m(F) = s, m($\Theta$) = 1-s, and m is 0 elsewhere.

Let F be a focus for two simple support functions with degrees of support $s_1$ and $s_2$, respectively. If

$$Bel = Bel_1 \oplus Bel_2$$

then m(F) = 1 - $(1-s_1)(1-s_2)$, m($\Theta$) = $(1-s_1)(1-s_2)$, and m is zero elsewhere.

Knowing these properties of the simple belief function, then $d_i^n$ can be used as a degree of support for the Bel with focus

$$\theta_k,$$

if i = k. Also, $d_i^n$ are degrees of support for Bel with focus

$$\neg \theta_k,$$

if i is not equal to k. This yields the probability assignments

$$m_{\theta_k} = d_k^n, \quad m_{\neg \theta_k} = 1 - \prod_{i \neq k} (1 - d_k^n).$$

Combining all of the knowledge about focus, the evidence can be obtained for class k and classifier n as:

$$e_k(y^n) = m_{\theta_k} \oplus m_{\neg \theta_k}.$$

Expanding on this equation yields:

$$e_k(\overline{y^n}) = \frac{d_k^n \prod_{i \neq k}(1 - d_i^n)}{1 - d_k^n(1 - \prod_{i \neq k}(1 - d_i^n))}.$$

Finally, evidences for all classifiers may be combined according to the Dempster-Shafer rule to obtain a measure of confidence for each class k for the input vector x,

$$\overline{x},$$

where

$$e_k(\overline{x}) = e_k(\overline{y^1}) \oplus ... \oplus e_k(\overline{y^N}).$$

Since

$$|\theta_i| = 1,$$

in this case, then

$$e_k(\overline{x}) = \prod_j e_k(\overline{y^j}).$$

Now, a class m can be assigned to an input vector,

$$\overline{x},$$

if

$$e_m = \max_{1 \leq k \leq K} e_k.$$

In accordance with the present invention, there are two almost equivalent best functions for a distance measure between vector

$$\overline{E_k^n}$$

and

$$\overline{y^n}.$$

One of these distance measures is a cosine between a classifier output vector and a mean vector for a subset of training data corresponding to each class, or $\cos^2(\alpha_k^n)$, where $\alpha_k^n$ is an angle between

$$\overline{E_k^n}$$

and

$$\overline{y^n},$$

or:

$$d_k^n = \phi_1(\overline{E_k^n}, \overline{y^n}) = \frac{(\sum_{i \in I} E_{ik}^n y_i^n)^2}{\|\overline{E_k^n}\|^2 \|\overline{y_k^n}\|^2}.$$

The other distance measure is a particular function of Euclidean distance between a classifier output vector and a mean vector for a subset of training data corresponding to each class, or of Euclidian distance between

$$\overline{E_k^n}$$

and

$$\overline{y^n},$$

and :

$$d_k^n = \phi_2\left(\overline{E_k^n}, \overline{y^n}\right) = \frac{\left(1 + \|\overline{E_k^n} - \overline{y^n}\|^2\right)^{-1}}{\sum_{1 \le i \le K}\left(1 + \|\overline{E_i^n} - \overline{y^n}\|^2\right)^{-1}} \ .$$

The present invention provides a simple and effective method for calculation of basic probability assignments, which permits confidences for individual classification decisions to be obtained. The process and method of the present invention can be used for the estimation of confidence for several classifiers and the combination of the results of several classifiers.

Industrial Applicability and Advantages

The present invention is useful in the field of pattern classification and recognition and has the advantage of using the results of different classifiers to improve classification and recognition performance. The present invention has the further advantage of eliminating approximations, which can be particularly prohibitive in cases where the number of classes is large. This, in turn, increases the quality of the classification and recognition performance. Simple and effective calculation of basic probability assignments permits confidences for individual classification decisions to be obtained. The present invention has the further advantage of allowing for the estimation of confidence for several classifiers and the combination of the results of several classifiers.

Finally, the present invention has the advantage of being applicable to any traditional statistical classifiers or neural networks of different architectures and based on different sets of features, as well as to different applications in which calculations of confidence for each classification decision are necessary.

Having described the invention in detail and by reference to the preferred embodiment thereof, it will be apparent that other modifications and variations are possible without departing from the scope of the invention defined in the appended claims.

The invention is summarized as follows :

1. A method for combining results of several classifiers comprises the steps of:

calculating basic probability assignments for each of the classifiers;

using the basic probability assignments to calculate confidences for each classifier;

combining the confidences for all of the classifiers; and

using the combined confidences to determine a class for data input to the classifiers.

2. A method according to 1 wherein the steps of calculating basic probability assignments and using the basic probability assignments to calculate confidences for each classifier comprise the step of applying a suitable theory of evidence.

3. A method according to 2 wherein the suitable theory of evidence comprises the Dempster-Shafer Theory of Evidence.

4. A method according to 1 wherein the step of using the basic probability assignments to calculate confidences for each classifier comprises the steps of:

using a distance measure between a classifier output vector and a mean vector for a subset of training data corresponding to each class; and

calculating evidences for all classification decisions for each classifier, using the distances as basic probability assignments.

5. A method according to 4 wherein the distance measure comprises one of two almost equivalent distance measures.

6. A method according to 5 wherein the first distance measure comprises a cosine between a classifier output vector and a mean vector for a subset of training data corresponding to each class.

7. A method according to 5 wherein the second distance measure comprises a function of Euclidean distance between a classifier output vector and a mean vector for a subset of training data corresponding to each class.

8. A method according to 1 wherein the step of combining the confidences comprises the step of combining the confidences according to the Dempster-Shafer Theory of Evidence.

9. A system for combining the results of several classifiers comprising:

means for calculating basic probability assignments for each of the classifiers;

means for calculating confidences for each classifier from the basic probability assignments;

means for combining the confidences for all of the classifiers; and

means for determining a class for data input to the classifiers from the combined confidences.

10. A system according to 9 wherein the means for calculating basic probability assignments and confidences for each classifier comprise a suitable theory of evidence.

11. A system according to 10 wherein the suitable theory of evidence comprises the Dempster-Shafer Theory of Evidence.

12. A system according to 9 wherein the means for calculating confidences for each classifier comprises:

a distance measure between a classifier output vector and a mean vector for a subset of training data corresponding to each class; and

means for calculating evidences for all classification decisions for each classifier, using the distances as basic probability assignments.

13. A system according to 12 wherein the distance measure comprises one of two almost equivalent distance measures.

14. A system according to 13 wherein the first distance measure comprises a cosine between a classifier output vector and a mean vector for a subset of training data corresponding to each class.

15. A system according to 13 wherein the second distance measure comprises a function of Euclidean distance between a classifier output vector and a mean vector for a subset of training data corresponding to each class.

## Claims

1. A method for combining results of several classifiers comprises the steps of:

calculating basic probability assignments for each of the classifiers;

using the basic probability assignments to calculate confidences for each classifier;

combining the confidences for all of the classifiers; and

using the combined confidences to determine a class for data input to the classifiers.

2. A method as claimed in claim 1 wherein the steps of calculating basic probability assignments and using the basic probability assignments to calculate confidences for each classifier comprise the step of applying a suitable theory of evidence.

3. A method as claimed in claim 1 wherein the step of using the basic probability assignments to calculate confidences for each classifier comprises the steps of:

using a distance measure between a classifier output vector and a mean vector for a subset of training data corresponding to each class; and

calculating evidences for all classification decisions for each classifier, using the distances as basic probability assignments.

4. A method as claimed in claim 3 wherein the distance measure comprises one of two almost equivalent distance measures.

5. A method as claimed in claim 4 wherein the first distance measure comprises a cosine between a classifier output vector and a mean vector for a subset of training data corresponding to each class.

6. A system for combining the results of several classifiers comprising:

means for calculating basic probability assignments for each of the classifiers;

means for calculating confidences for each classifier from the basic probability assignments;

means for combining the confidences for all of the classifiers; and

means for determining a class for data input to the classifiers from the combined confidences.

7. A system as claimed in claim 6 wherein the means for calculating basic probability assignments and confidences for each classifier comprise a suitable theory of evidence.

8. A system as claimed in claim 7 wherein the means for calculating confidences for each classifier comprises:

a distance measure between a classifier output vector and a mean vector for a subset of training data corresponding to each class; and

means for calculating evidences for all classification decisions for each classifier, using the distances as basic probability assignments.

9. A system as claimed in claim 8 wherein the distance measure comprises one of two almost equivalent distance measures.

10. A system as claimed in claim 9 wherein the second distance measure comprises a function of Euclidean distance between a classifier output vector and a mean vector for a subset of training data corresponding to each class.

FIG.1

FIG.2